# EUROPEAN PATENT APPLICATION

(11) **EP 2 579 579 A1**
(43) Date of publication of application: **10.04.2013**
(21) Application number: 12177431.9
(22) Date of filing: 23.07.2012
(51) Int. Cl.: H04N 5/335, H04N 5/243, H04N 5/347

(54) **Imaging apparatus, imaging program and imaging method**

(30) Priority: 26.09.2011 JP 2011209538
(71) Applicant: Fujifilm Corporation, Minato-ku Tokyo (JP)
(72) Inventor: Tanaka, Yasutake, Kanagawa (JP)
(74) Representative: Klunker . Schmitt-Nilson . Hirsch

(57) **Abstract**

An imaging apparatus provided with an imaging device, setting means and gain control means. The imaging device images an imaging subject. On the basis of a saturation charge amount of the imaging device, which changes in accordance with a pixel addition number according to a pixel addition function of the imaging device, the setting means set a gain of imaging signals in accordance with a specified pixel addition number. The gain control means control the gain of the imaging signals in accordance with the gain set by the setting means.

## Description

### BACKGROUND OF THE INVENTION

### Field of the Invention

The present invention relates to an imaging apparatus, an imaging program, and an imaging method.

### Description of the Related Art

Heretofore, among imaging apparatuses that use imaging devices such as CCDs and the like, a variety of imaging apparatuses have been proposed that may perform imaging with improved sensitivity by pixel addition.

For example, Japanese Patent Application Laid-Open (JP-A) No. 2007-166600 discloses a technology that sets the gain of an amplifier in an addition mode, with two-pixel addition or the like, to half the gain in a non-addition mode, and thus realizes a dynamic range in the addition mode that is the same as the dynamic range in the non-addition mode.

JP-A No. 2002-10140 discloses a technology that, when 2×2 horizontal and vertical pixel addition-addition at a horizontal transfer path and at a floating diffusion amplifier-is performed, prevents image degradation by halving a light exposure amount and setting the size of a reference voltage of an analog-to-digital converter to twice that in an ordinary mode.

JP-A No. 2004-172845 discloses a technology that, during electronic zooming, halts addition of vertical lines, implements non-added readouts, and doubles the amplification ratio of a gain control amplifier.

JP-A No. 9-107505 discloses a technology that controls the potential of a semiconductor support portion in a field mode (a pixel addition mode) such that a ratio between an amount that is half of a saturation charge amount of optoelectronic conversion elements in a frame mode (a non-pixel addition mode) and a maximum charge transfer amount of a vertical transfer path is approximately 1:1.

In cases in which pixels of an imaging device are added by a pixel addition function, saturation charge amounts of the imaging device change. However, in the related art technologies mentioned above, no consideration is given to changes in the saturation charge amounts of the imaging devices when pixel addition is performed, and the dynamic range may be impaired.

### SUMMARY OF THE INVENTION

The present invention provides an imaging apparatus, an imaging program and an imaging method capable of avoiding impairment of the dynamic range in a case in which pixel addition is performed.

According to a first aspect of the invention, there is provided an imaging apparatus including: an imaging device that images an imaging subject; setting means, on the basis of a saturation charge amount of the imaging device which changes in accordance with a pixel addition number according to a pixel addition function of the imaging device, set a gain of imaging signals in accordance with a specified pixel addition number; and gain control means that control the gain of the imaging signals in accordance with the gain set by the setting means.

According to this invention, the gain of the imaging signals captured by the imaging device is set on the basis of the specified pixel addition number and the saturation charge amount that changes in accordance with the pixel addition number, which is the saturation charge amount of a location relating to the pixel addition function of the imaging device that images an imaging subject, and the gain of the imaging signals is controlled in accordance with the set gain. Therefore, even in a case in which pixel addition is performed and the saturation charge amount of the imaging device changes, impairment of the dynamic range may be avoided.

In a second aspect of the present invention, in the first aspect, the saturation charge amount of the imaging device may be determined on the basis of pixel addition numbers in a vertical direction and a horizontal direction, and at least one of a saturation charge amount of a light detection element of the imaging device, a saturation charge amount of a horizontal transfer path of the imaging device, or a saturation charge amount of an amplifier that amplifies imaging signals outputted from the horizontal transfer path.

In a third aspect of the present invention, in the first or second aspect, the setting means may set, as the gain, a value for which a pre-specified number of gradations is divided by the saturation charge amount according to the specified pixel addition number.

In a fourth aspect of the present invention, in any one of the first to third aspects, the imaging apparatus may further include storage means that store table data of gains that are values for which a pre-specified number of gradations is respectively divided by saturation charge amounts of respective pixel addition numbers, and the setting means may set the gain in accordance with the specified pixel addition number on the basis of the table data.

In a fifth aspect of the present invention, in the fourth aspect, the imaging apparatus may further include correction means that correct the table data for each of the pixel addition numbers, a new gain being a value for which the pre-specified number of gradations is divided by an output value of the imaging device if the imaging device is exposed and saturated.
In a sixth aspect of the present invention, in any one of the first to fifth aspects, the setting means may specify the pixel addition number in accordance with an imaging mode.

According to a seventh aspect of the invention, there is provided a program causing a computer to function as each of the means which configure the imaging apparatus according to any one of the first to sixth aspect

According to an eighth aspect of the invention, there is provided an imaging method including: setting a gain of imaging signals in accordance with a specified pixel addition number on the basis of a saturation charge amount of an imaging apparatus that images an imaging subject, which saturation amount changes in accordance with a pixel addition number according to a pixel addition function of the imaging device; and controlling the gain of the imaging signals in accordance with the set gain.

According to the present invention, impairment of the dynamic range may be avoided even in cases in which pixel addition is performed.

### BRIEF DESCRIPTION OF THE DRAWINGS

Preferred embodiments of the present invention will be described in detail based on the following figures, wherein:
Fig. 1 is a perspective diagram of an imaging system.
Fig. 2 is a front elevation diagram of an imaging apparatus.
Fig. 3 is a schematic block diagram of an image processing device 100.
Fig. 4 is a schematic block diagram of an imaging section 30.
Fig. 5 is a diagram showing schematic structure of an imaging device.
Fig. 6 is a diagram showing data of a table of saturation charge amounts according to pixel addition numbers.
Fig. 7 is a diagram showing data of a table of gains according to pixel addition numbers.
Fig. 8 is a flowchart of a control routine executed by a CPU 70A of the image processing device 100.

### DETAILED DESCRIPTION OF THE INVENTION

Herebelow, an exemplary embodiment of the present invention is described with reference to the attached drawings.

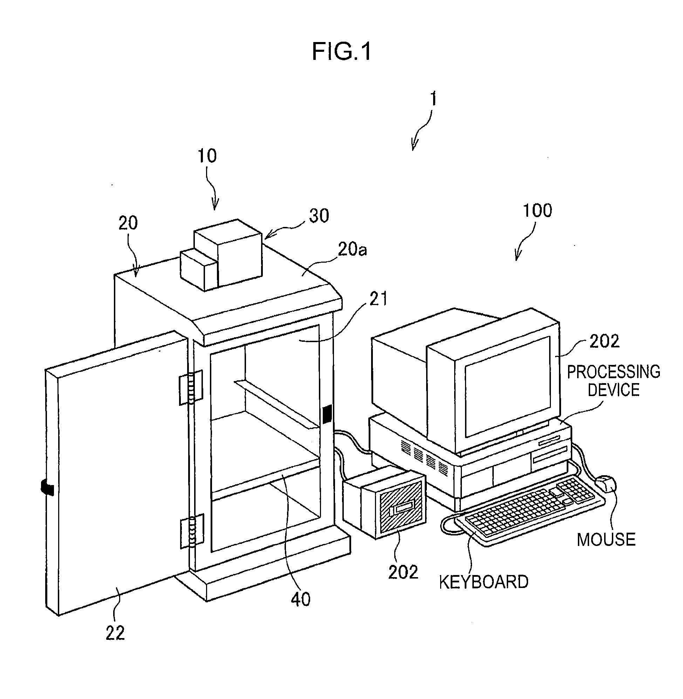

Fig. 1 is a perspective diagram showing an example of an imaging system that utilizes an imaging apparatus relating to the present invention. The imaging system is an imaging system 1 that images an imaging subject by illuminating excitation light/not illuminating excitation light in accordance with the imaging subject and acquires a captured image of the imaging subject. The imaging system 1 includes an imaging apparatus 10 and an image processing device 100.

The imaging apparatus 10 images the imaging subject and outputs the acquired image data of the imaging subject to the image processing device 100. The image processing device 100 applies predetermined image processing to the received image data in accordance with requirements, and displays the image data at a display section 202.

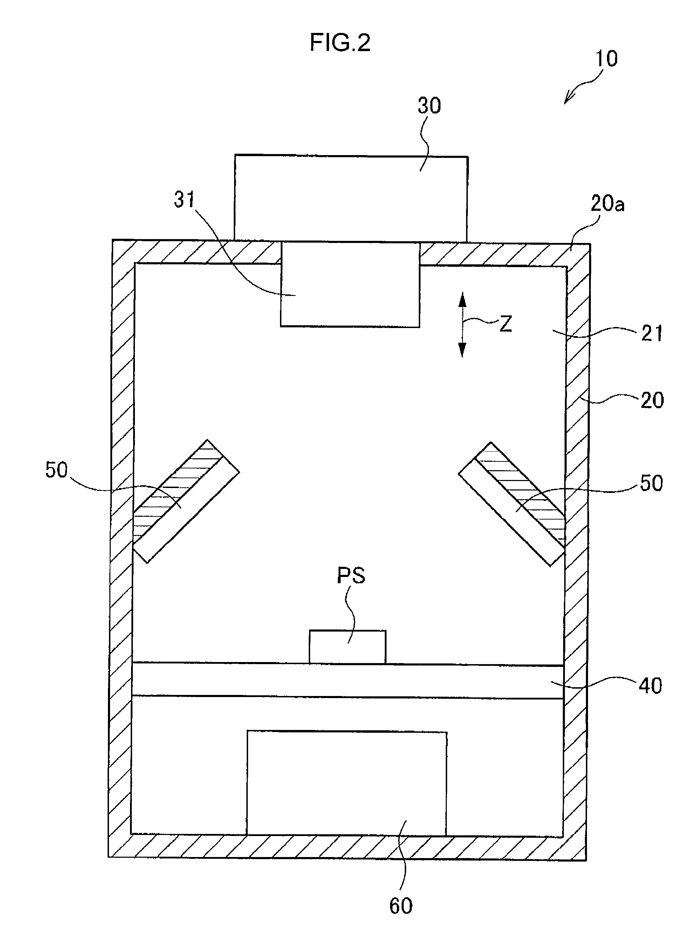

Fig. 2 shows a front elevation diagram of the imaging apparatus 10 in a state in which a lid 22 (see Fig. 1) is open. As shown in Fig. 2, the imaging apparatus 10 is equipped with an imaging subject arrangement portion 40, a casing 20, an imaging section 30, epi-illumination light sources 50 and a transmission light source 60. An imaging subject PS is disposed on the imaging subject arrangement portion 40. The casing 20 accommodates the imaging subject arrangement portion 40 thereinside. The imaging section 30 images the imaging subject PS disposed at the imaging subject arrangement portion 40. The epi-illumination light sources 50 and the transmission light source 60 illuminate excitation light at the imaging subject PS, and are disposed inside the casing 20.

The casing 20 includes a cavity portion 21 formed in a substantially cuboid shape, and includes thereinside the imaging subject arrangement portion 40 on which the imaging subject PS is disposed. The lid 22 shown in Fig. 1 is mounted to the casing 20 to be openable and closable, and a user may open the lid 22 and accommodate the imaging subject PS inside the casing 20. Thus, the casing 20 structures a black box such that external light does not enter the cavity portion 21.

The imaging section 30 is fixed to an upper face 20a of the casing 20 and is described in detail below. The imaging section 30 includes, for example, an imaging device such as a CCD or the like. A cooling device is mounted at the imaging device and cools the imaging device. Thus, the inclusion of a noise component due to dark currents in captured image information is prevented.

A lens unit 31 is mounted at the imaging section 30. The lens unit 31 is provided to be movable in the direction of arrow Z, for focusing on the imaging subject PS.

The epi-illumination light sources 50 illuminate excitation light towards the imaging subject PS disposed on the imaging subject arrangement portion 40. The transmission light source 60 illuminates imaging light from below the imaging subject PS. If a fluorescent material is being imaged, excitation light is illuminated at the imaging subject from one or both of the epi-illumination light sources 50 and the transmission light source 60, depending on the imaging subject.

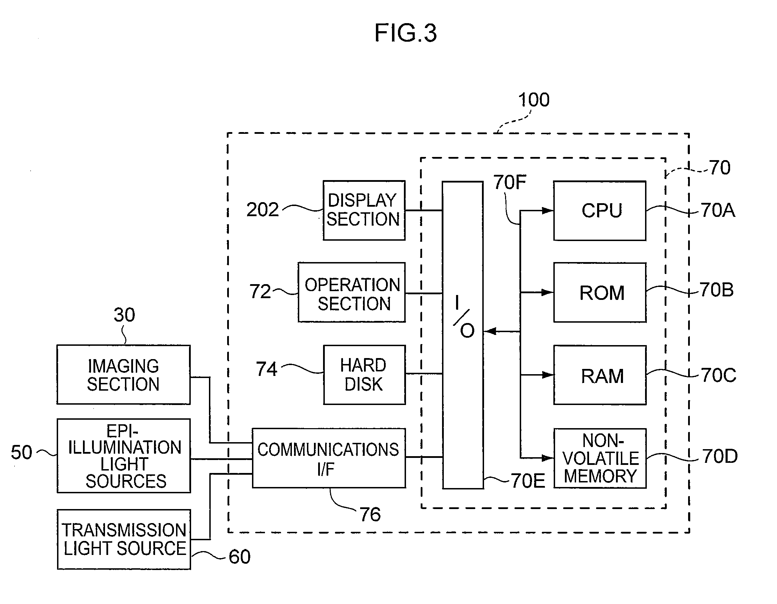

Fig. 3 shows general structure of the image processing device 100. As shown in Fig. 3, the image processing device 100 includes a main controller 70.

The main controller 70 is structured with a CPU (central processing unit) 70A, a ROM (read-only memory) 70B, a RAM (random access memory) 70C, A non-volatile memory 70D and an input/output interface (I/O) 70E that are connected to one another via a bus 70F.

The display section 202, an operation section 72, a hard disk 74 and a communications interface (I/F) 76 are connected to the I/O 70E. The main controller 70 performs overall control of these functional units.

The display section 202 is constituted with, for example, a cathode ray tube, a liquid crystal display device or the like. The display section 202 displays images captured by the imaging apparatus 10, and displays screens for applying various specifications and instructions to the imaging apparatus 10 and so forth.

The operation section 72 is constituted with a mouse and keyboard or the like. The operation section 72 is for a user to give various instructions to the imaging apparatus 10 by operating the operation section 72.

The hard disk 74 stores image data of captured images that have been imaged by the imaging apparatus 10, a control program that is described below, various data that are required for control, and so forth.

The communications interface 76 is connected with the imaging section 30, epi-illumination light sources 50 and transmission light source 60 of the imaging apparatus 10. The CPU 70A instructs the imaging section 30, via the communications interface 76, to capture images under imaging conditions according to types of imaging subject. In a case in which excitation light is to be illuminated at an imaging subject, the CPU 70A instructs the illumination of excitation light from one or both of the epi-illumination light sources 50 and the transmission light source 60, receives imaging data of a captured image that is imaged by the imaging section 30, and carries out image processing and the like.

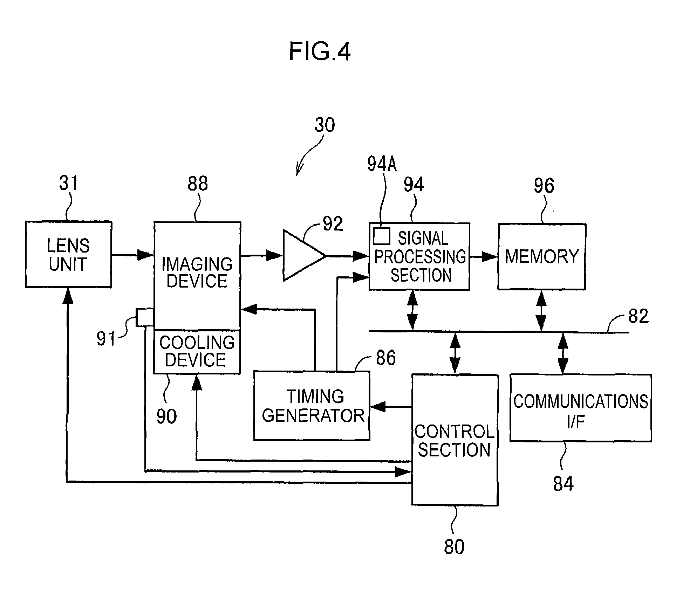

Fig. 4 shows general structure of the imaging section 30. As shown in Fig. 4, the imaging section 30 is equipped with a control section 80, and the control section 80 is connected with a communications interface (I/F) 84 via a bus 82. The communications interface 84 is connected with the communications interface 76 of the image processing device 100.

When an imaging instruction is received from the image processing device 100 via the communications interface 84, the control section 80 controls the respective sections in accordance with details of the instruction and images the imaging subject PS disposed on the imaging subject arrangement portion 40. The control section 80 transmits the image data of the captured image to the image processing device 100 via the communications interface 84.

The control section 80 is connected to the lens unit 31, a timing generator 86, a cooling device 90 that cools an imaging device 88, and a temperature sensor 91 that detects a temperature of the imaging device 88.

The control section 80 is constituted by a computer that includes, for example, a CPU, RAM, ROM, non-volatile ROM and the like, which are not shown in the drawings. The non-volatile ROM stores a control program that controls the respective sections. The respective sections connected to the control section 80 are controlled by this program being read out and executed by the CPU.

Although not shown in the drawings, the lens unit 31 includes, for example, a lens group formed of plural optical lenses, an aperture adjustment mechanism, a zoom mechanism, an automatic focus control mechanism and the like. The lens group is provided to be movable in the direction of arrow Z in Fig. 2 for focusing on the imaging subject PS. The aperture control mechanism alters the diameter of an aperture and adjusts incident light amounts on the imaging device 88. The zoom mechanism adjusts a position at which the lens is disposed and implements zooming. The automatic focus control mechanism adjusts the focusing point in accordance with a distance between the imaging subject PS and the imaging apparatus 10.

Light from the imaging subject PS passes through the lens unit 31 and is focused on the imaging device 88 as an image of the imaging subject.

As described in detail below, the imaging device 88 includes light detection portions corresponding with a plural number of pixels, a horizontal transfer path, vertical transfer paths and so forth. The imaging device 88 features a function of optoelectronically converting the imaging subject image that has been imaged at the imaging surface to electronic signals. For example, an image sensor such as a charge coupled device (CCD), a metal oxide semiconductor (MOS) sensor or the like is employed. In the present exemplary embodiment, a CCD is used as the imaging device 88.

The imaging device 88 is controlled by timing signals from the timing generator 86, and optoelectronically converts incident light from the imaging subject PS at the light detection portions.

The signal charges to which the light is optoelectronically converted by the imaging device 88 are voltage-converted by a charge-voltage conversion amplifier (a floating diffusion amplifier) 92 to analog signals, and are outputted to a signal processing section 94.

The timing generator 86 includes an oscillator that generates a basic clock signal (a system clock) that operates the imaging section 30. This basic clock is, for example, supplied to the respective sections and divided to generate various timing signals. For example, timing signals representing a vertical synchronization signal, a horizontal synchronization signal, electronic shutter pulses and the like are generated and supplied to the imaging device 88. Further timing signals-sampling pulses for correlated double sampling, a conversion clock for analog-to-digital conversion, and the like-are generated and supplied to the signal processing section 94.

As described in detail below, the signal processing section 94 includes an amplification circuit 94A, a correlated double sampling (CDS) circuit, an analog-to-digital (A/D) converter and the like. The amplification circuit 94A amplifies the image signals in accordance with a gain set in accordance with pixel addition numbers. The CDS circuit is controlled by timing signals from the timing generator 86 and applies correlated double sampling processing to the inputted analog signals. The A/D converter converts the analog signals to which the correlated double sampling processing has been applied to digital signals. The signal processing section 94 further includes a processing section that performs A/D sampling of feed-through portions and signal portions and that performs processing to calculate difference data between digital values of the feed-through portions and signal portions.

An object of the correlated double sampling processing is to reduce noise and the like included in the output signals of the imaging device 88. The correlated double sampling processing obtains pixel data by finding differences between levels of the feed-through portion and levels of the signal portion corresponding to an image portion, which are included in the output signals of each pixel of the imaging device 88.

The digital signals after the correlated double sampling processing are outputted to a memory 96 and temporarily stored. The image data temporarily stored in the memory 96 is sent to the image processing device 100 via the communications interface 84.

The cooling device 90 is constituted by, for example, a Peltier device or the like, and a cooling temperature thereof is controlled by the control section 80. If the imaging subject PS is a chemoluminescent material, the image is captured by image exposure being performed for a relatively long time without excitation light being illuminated. Correspondingly, the temperature of the imaging device 88 may rise and image quality may be adversely affected by an increase in dark currents and the like. Therefore, in the control section 80, the temperature of the imaging device 88 is maintained at a cooling temperature instructed by the image processing device 100. While the temperature of the imaging device 88 detected by the temperature sensor 91 is monitored, the cooling device 90 is controlled by pulse width modulation (PWM) to cool the imaging device 88.

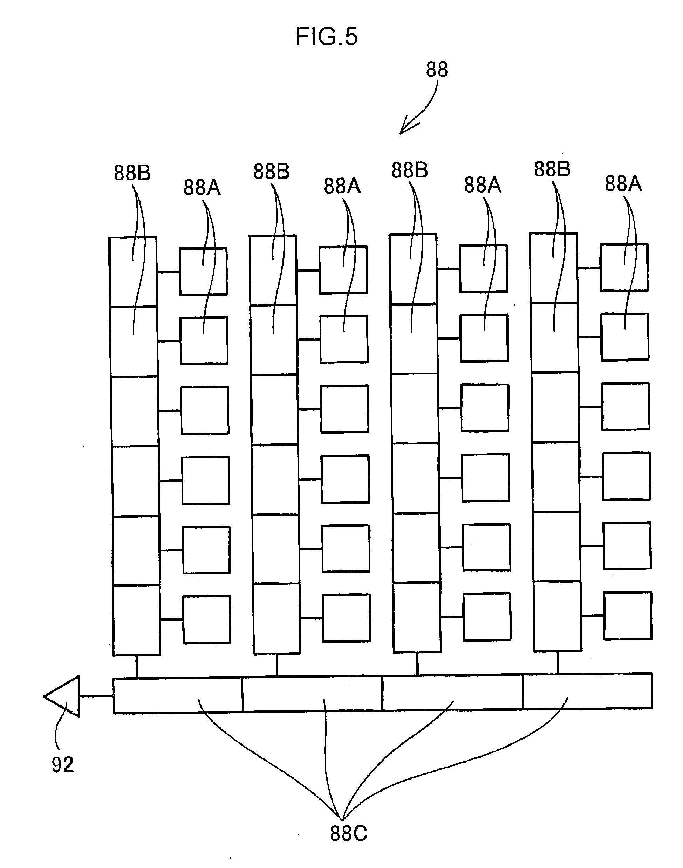

Fig. 5 shows general structure of the imaging device 88 employing the CCD. The imaging device 88 includes light detection portions (photodiodes) 88A, which constitute pixels, vertical transfer paths 88B and a horizontal transfer path 88C.

Charges to which light detected by the light detection portions 88A have been optoelectronically converted are outputted to the vertical transfer path 88B in each column. The charges outputted to the vertical transfer path 88B in each column are respectively transferred to the horizontal transfer path 88C, and the charges respectively outputted to the horizontal transfer path 88C are sequentially transferred to the charge-voltage conversion amplifier 92.

The imaging device 88 is equipped with a pixel addition function. Pixel addition in the vertical direction is implemented at the horizontal transfer path 88C, and pixel addition in the horizontal direction is implemented at the charge-voltage conversion amplifier 92. In a case of a structure in which a summing gate is provided at an output stage of the horizontal transfer path 88C, the horizontal direction pixel addition may be implemented by the summing gate. In the present exemplary embodiment, however, a case in which pixel addition in the horizontal direction is implemented by the charge-voltage conversion amplifier 92 is described.

The light detection portions 88A, the horizontal transfer path 88C and the charge-voltage conversion amplifier 92 each have particular saturation charge amounts.

In the present exemplary embodiment, as an example, a case is described in which the saturation charge amount of each light detection portion 88A is 10 ke⁻, the saturation charge amount of the horizontal transfer path 88C is 25 ke⁻, and the saturation charge amount of the charge-voltage conversion amplifier 92 is 55 ke⁻. Furthermore, in the described case, gradation of an image is 16 bits, that is, 65,536 (=2¹⁶) gradations.

Here, in a case in which 1 pixel is added in the vertical direction and 1 pixel is added in the horizontal direction for (1×1) pixel addition, that is, a case with no pixel addition, the charge amounts of charges outputted from the imaging device 88 are limited by the saturation charge amounts of the light detection portions 88A. Therefore, the maximum value of charge amounts of the charges outputted from the imaging device 88 is 10 ke⁻. Therefore, if the gain is set such that a pixel value is at the maximum value of 65,535 in a case in which the charge amount is 10 ke⁻, the dynamic range may be utilized to the maximum extent.

In a case in which 2 pixels are added in the vertical direction and 2 pixels are added in the horizontal direction for (2×2) pixel addition, the maximum value of charge amounts of the charges outputted from the imaging device 88 is 40 ke⁻ (=2×2×10 ke⁻). Therefore, if the gain is set such that a pixel value is at the maximum value in a case in which the charge amount is 40 ke⁻, the dynamic range may be utilized to the maximum extent.

In a case in which 3 pixels are added in the vertical direction and 1 pixel is added in the horizontal direction for (3×1) pixel addition, the maximum value of charge amounts of the charges outputted from the imaging device 88 is 25 ke⁻, When three pixels are added in the vertical direction at the horizontal transfer path 88C, the maximum value of the charge amount is 30 ke⁻, but the saturation charge amount of the horizontal transfer path 88C is 25 ke⁻ and there may be saturation, so 25 ke⁻ is the maximum value. Therefore, if the gain is set such that a pixel value is at the maximum value in a case in which the charge amount is 25 ke⁻, the dynamic range may be utilized to the maximum extent.

In a case in which 3 pixels are added in the vertical direction and 2 pixels are added in the horizontal direction for (3×2) pixel addition, the maximum value of charge amounts of the charges outputted from the imaging device 88 is (the saturation charge amount of the horizontal transfer path 88C) × (the pixel addition number in the horizontal direction), which specifically is 50 ke⁻ (=25 ke⁻×2). Therefore, if the gain is set such that a pixel value is at the maximum value in a case in which the charge amount is 50 ke⁻, the dynamic range may be utilized to the maximum extent.

In a case in which 3 pixels are added in the vertical direction and 3 pixels are added in the horizontal direction for (3×3) pixel addition, the maximum value of charge amounts of the charges outputted from the imaging device 88 is 55 ke⁻. The maximum value of charge amounts of pixel charges when three pixels in the vertical direction are added at the horizontal transfer path 88C is 25 ke⁻. If three of these are added in the horizontal direction by the charge-voltage conversion amplifier 92, the maximum value of charge amounts is 75 ke⁻ (=25 ke⁻×3). However, the saturation charge amount of the charge-voltage conversion amplifier 92 is 55 ke⁻ and there may be saturation, so 55 ke⁻ is the maximum value. Therefore, if the gain is set such that a pixel value is at the maximum value in a case in which the charge amount is 55 ke⁻, the dynamic range may be utilized to the maximum extent.

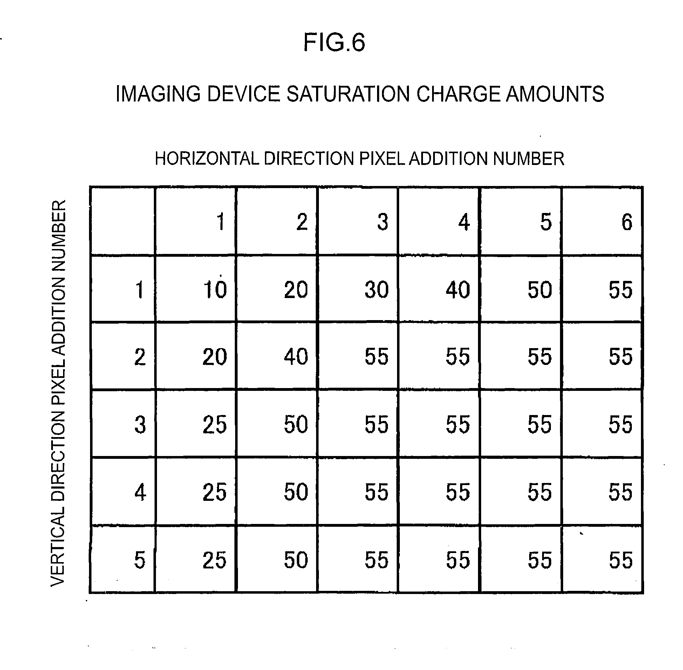

Fig. 6 shows data in a table presenting relationships between vertical direction pixel addition numbers (the number of pixels added at the horizontal transfer path 88C), pixel addition numbers in the horizontal direction (the number of pixels added at the charge-voltage conversion amplifier 92), and saturation charge amounts. Fig. 6 shows the saturation charge amounts for cases in which the vertical direction pixel addition numbers are from 1 to 5, and the horizontal direction pixel addition numbers are from 1 to 6.

Thus, because saturation charge amounts of the imaging device 88 differ depending on pixel addition numbers, if the gain is fixed regardless of saturation charge amounts, the dynamic range may be impaired. Accordingly, in the present exemplary embodiment, impairment of the dynamic range is avoided by the gain being set in accordance with pixel addition numbers.

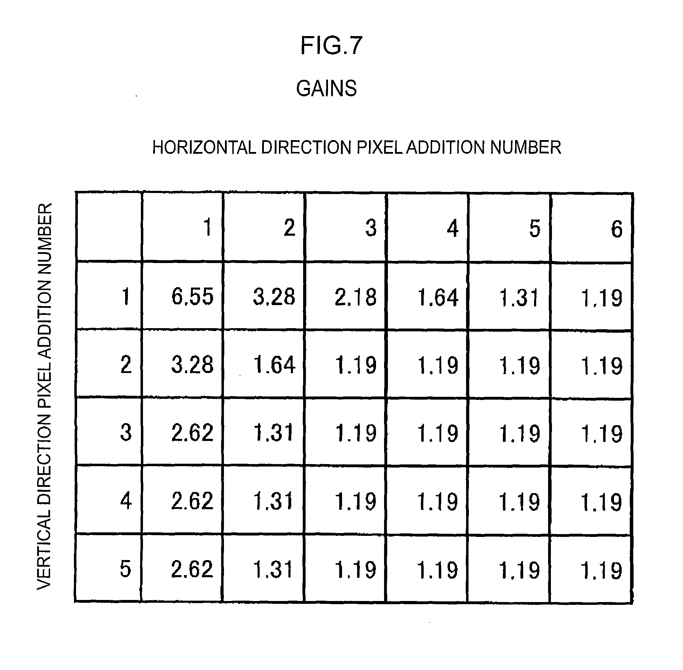

Specifically, the gain is set in accordance with the pixel addition numbers, using data in a table of gains as illustrated in Fig. 7.

Each value in the table data of gains shown in Fig. 7 represents a value for which the number of gradations is divided by the respective saturation charge amount in Fig. 6, that is, the gain per 1 e⁻ of charge. In the present exemplary embodiment, as an example, the number of gradations is 65,536 (=2¹⁶). In Fig. 7, the third decimal place is rounded off. Thus, for example, in a case of (3×3) pixel addition in which 3 pixels are added in the vertical direction and 3 pixels are added in the horizontal direction, the gain is (65,536/(55×1000)) ≈ 1.19.

The table data of gains shown in Fig. 7 is, for example, stored in advance in the hard disk 74.

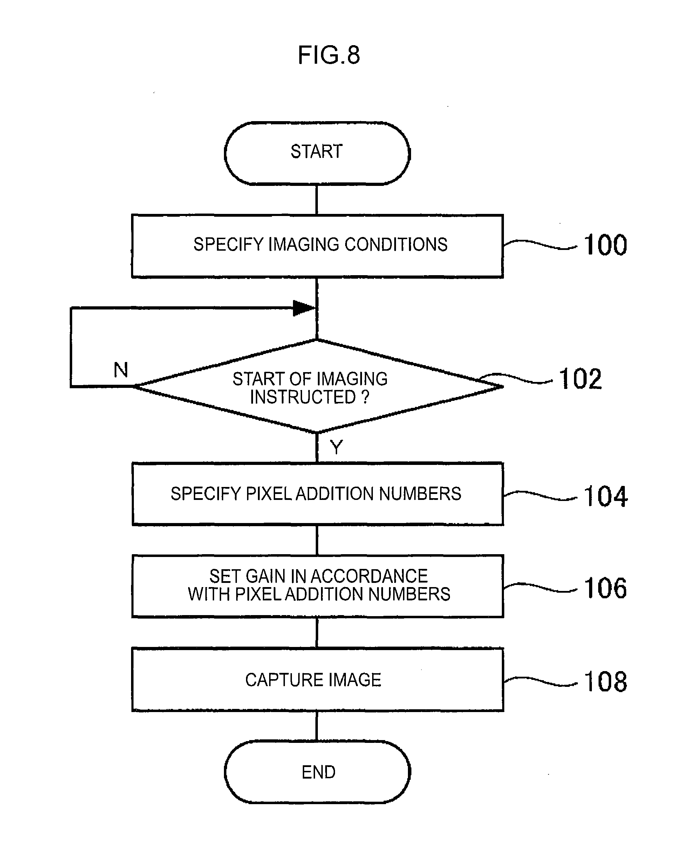

Next, as operation of the present exemplary embodiment, processing that is executed by the CPU 70A of the image processing device 100 is described with reference to the flowchart shown in Fig. 8.

The flowchart shown in Fig. 8 is executed when a user disposes an imaging subject PS on the imaging subject arrangement portion 40 and operates the operation section 72 to instruct image capture.

In step 100, imaging conditions are specified. At this time, for example, an imaging condition specification screen is displayed at the display section 202 and various imaging conditions are specified by the user. The imaging conditions include, for example, a color mode specifying color imaging or monochrome imaging, an exposure duration, an imaging mode and the like. The user specifies imaging conditions and then instructs the start of imaging.

In step 102, a determination is made as to whether the start of imaging has been instructed. If the start of imaging has been instructed, the processing proceeds to step 104. If the start of imaging has not been instructed, the processing waits.

In step 104, the pixel addition numbers are specified. The pixel addition numbers are specified in accordance with, for example, the imaging mode specified by the user (resolution, sensitivity and the like). Specifically, for example, table data in which correspondences between imaging modes and pixel addition numbers are pre-specified is memorized in advance in the hard disk 74, and the pixel addition numbers corresponding to the imaging mode are specified using this table data. However, the pixel addition numbers may be specified among the imaging conditions by the user.

In step 106, a gain corresponding to the specified pixel addition numbers is found from the table data of gains illustrated in Fig. 7, and the gain that is found and the pixel addition numbers are outputted to the imaging section 30. At the control section 80 of the imaging section 30, the amplification circuit 94A of the signal processing section 94 is set to the gain instructed by the image processing device 100, and the pixel addition numbers are set at the imaging device 88.

In step 108, the imaging section 30 is instructed to execute imaging. Hence, the imaging section 30 executes imaging of the imaging subject PS with the specified exposure duration and pixel addition numbers. At the imaging device 88, the imaging signals are subjected to pixel addition in the specified pixel addition numbers and outputted. The imaging signals outputted from the imaging device 88 are amplified by the set gain at the amplification circuit 94A of the signal processing section 94, and outputted to subsequent circuits. For example, if the pixel addition numbers are 2×2, then the gain is 1.64 as shown in Fig. 7, so the imaging signals are amplified by ×1.64.

Thus, in the present exemplary embodiment, table data of gains is specified on the basis of saturation charge amounts of the imaging device 88, which change in accordance with the pixel addition numbers, and, from this table data, the gain is set and imaging signals are amplified in accordance with pixel addition numbers that are specified in accordance with an imaging mode. Therefore, compared with a case in which the gain has a fixed value regardless of saturation charge amounts, impairment of the dynamic range may be avoided.

The table data of gains illustrated in Fig. 7 may be amended. For example, if the vertical direction pixel addition number is from 1 to 5 and the horizontal direction pixel addition number is from 1 to 6 as shown in Fig. 7, for each case of the respective pixel addition numbers from (1×1) to (5×6), the gain is set to 1 and the imaging device 88 is exposed for a long duration and saturated. A value for which the number of gradations is divided by the output value of the imaging device 88 when saturated serves as a new gain. For example, the number of gradations is 16 bits, that is, 65,536 (=2¹⁶), and the imaging device 88 is exposed for a long duration and saturated for the case in which the pixel addition numbers are, for example, (3×3). If the output value of the imaging device 88 in this case is 52,000, the new gain for cases in which the pixel addition numbers are (3×3) is 65,536/52,000 ≈ 1.26. By applying such amendments to the respective pixel addition numbers, the gains may be suitably set even if the saturation charge amounts of components change over time.

In the present exemplary embodiment, a case is described in which the saturation charge amount of each light detection portion 88A is 10 ke⁻, the saturation charge amount of the horizontal transfer path 88C is 25 ke⁻, and the saturation charge amount of the charge-voltage conversion amplifier 92 is 55 ke⁻. However, even among the same kind of imaging device, saturation charge amounts of the components may be slightly different depending on individual differences. Accordingly, the table data of saturation charge amounts illustrated in Fig. 6 may be specified with the saturation charge amounts of the components set lower. Because the saturation charge amounts of the components are set lower, even if there are slight individual differences between imaging devices, saturation may be prevented for all imaging devices.

Further, in the present exemplary embodiment a case is described in which control of the gain is implemented at the amplification circuit 94A of the signal processing section 94. However, the gain may be controlled by multiplying pixel values by the gain after the imaging signals have been converted to digital image data.

The constitution of the imaging system 1 described in the present exemplary embodiment (see Fig. 1 to Fig. 4) is an example, and it will be clear that unnecessary portions may be removed and new portions may be added within a scope not departing from the spirit of the present invention.

The flow of processing of the control program described in the present exemplary embodiment (see Fig. 8) is also an example, and it will be clear that unnecessary steps may be removed, new steps may be added, and the processing sequence may be rearranged within a scope not departing from the spirit of the present invention.

Embodiments of the present invention are described above, but the present invention is not limited to the embodiments as will be clear to those skilled in the art.

## Claims

1. An imaging apparatus comprising:
an imaging device that images an imaging subject;
setting means that, on the basis of a saturation charge amount of the imaging device which changes in accordance with a pixel addition number according to a pixel addition function of the imaging device, set a gain of imaging signals in accordance with a specified pixel addition number; and
gain control means that control the gain of the imaging signals in accordance with the gain set by the setting means.

2. The imaging apparatus according to claim 1, wherein the saturation charge amount of the imaging device is determined on the basis of pixel addition numbers in a vertical direction and a horizontal direction, and at least one of a saturation charge amount of a light detection element of the imaging device, a saturation charge amount of a horizontal transfer path of the imaging device, or a saturation charge amount of an amplifier that amplifies imaging signals outputted from the horizontal transfer path.

3. The imaging apparatus according to claim 1 or 2, wherein the setting means set, as the gain, a value for which a pre-specified number of gradations is divided by the saturation charge amount according to the specified pixel addition number.

4. The imaging apparatus according to any one of claims 1 to 3, further comprising storage means that store table data of gains that are values for which a pre-specified number of gradations is respectively divided by saturation charge amounts of respective pixel addition numbers,
wherein the setting means set the gain in accordance with the specified pixel addition number on the basis of the table data.

5. The imaging apparatus according to claim 4, further comprising correction means that correct the table data for each of the pixel addition numbers, a new gain being a value for which the pre-specified number of gradations is divided by an output value of the imaging device if the imaging device is exposed and saturated.

6. The imaging apparatus according to any one of claims 1 to 5, wherein the setting means specify the pixel addition number in accordance with an imaging mode.

7. A program causing a computer to function as each of the means which configure the imaging apparatus according to any one of claims 1 to 6.

8. An imaging method comprising:
setting a gain of imaging signals in accordance with a specified pixel addition number on the basis of a saturation charge amount of an imaging device that images an imaging subject, which saturation amount changes in accordance with a pixel addition number according to a pixel addition function of the imaging device; and
controlling the gain of the imaging signals in accordance with the set gain.
